# EUROPEAN PATENT APPLICATION

(11) **EP 2 456 166 A1**
(43) Date of publication of application: **23.05.2012**
(21) Application number: 11189342.6
(22) Date of filing: 16.11.2011
(51) Int. Cl.: H04L 29/06

(54) **Apparatus and method for selectiveley decrypting and transmitting DRM contents**

(30) Priority: 17.11.2010 KR 20100114575
(71) Applicant: Samsung SDS Co. Ltd., Seoul 135-082 (KR)
(72) Inventor: Lee, Ki-Hyung, 448-514 Gyeonggi-Do (KR); Lee, Gil, 405-260 Incheon (KR); Moon, Heoung-Keun, 431-797 Gyeonggi-Do (KR); Yeo, Hwan-Woon, 445-802 Gyeonggi-Do (KR); Kim, Hwang-Hoo, 156-070 Seoul (KR); Park, Joon-Cheol, 448-162 Gyeonggi-Do (KR); Park, Jae-Hee, 609-310 Busan (KR)
(74) Representative: Grünecker, Kinkeldey, Stockmair & Schwanhäusser

(57) **Abstract**

Provided are apparatus and method for selectively decrypting and transmitting DRM contents. A policy storing unit stores information on devices allowed for decryption of contents. A policy processing unit determines whether a target device, to which an encrypted content is transmitted, is a device allowed for decryption based on the information stored in the policy storing unit. A decryption unit decrypts the encrypted content. And a control unit controls the decryption unit to decrypt the encrypted content when the target device is the device allowed for decryption.

## Description

### BACKGROUND

The present invention relates to an apparatus and method for selectively decrypting and transmitting Digital Rights Management (DRM) contents, and more particularly, to an apparatus and method for selectively decrypting and transmitting contents when the contents are uploaded.

A DRM agent applies DRM to documents to restrict illegal copy and falsification. Accordingly, when a device at a transmission side having a DRM agent installed transmits a specific document, to which DRM is applied, to a device at a reception side, if the recipient device has no DRM agent for decrypting the DRM, a user at the reception side cannot read the received document. Due to this, generally, a user of the device at the transmission side manually decrypts the DRM of the document, and then transmits the decrypted document to the recipient device. Or, like the device at the transmission side, the DRM agent needs to be installed to the recipient device. However, the above way of dealing with the DRM may be inappropriate in situations that a plurality of companies or users temporarily share documents, there are physical security means for illegal use and disclosure of documents, or there are agreement contracts between contracting parties.

### SUMMARY

The present invention is directed to providing an apparatus and method for transmitting a content, to which DRM is applied (hereinafter, 'DRM content'), after automatically decrypting it to a device at a reception side.

The present invention is also directed to providing an apparatus and method for encrypting automatically a DRM content received from outside and storing it to an internal or external storage.

The present invention is also directed to providing a non-transitory computer readable medium recording a program for executing in a computer a method for transmitting a content, to which DRM is applied (hereinafter, 'DRM content'), after automatically decrypting it to a device at a reception side.

According to an aspect of the present invention, there is provided an apparatus for transmitting contents, the apparatus includes: a policy processing unit determining whether a target device, to which an encrypted content is transmitted, is a device allowed for decryption based on the information stored in the policy storing unit; a decryption unit decrypting the encrypted content; and a control unit controlling the decryption unit to decrypt the encrypted content if the target device is the device allowed for decryption.

According to another aspect of the present invention, there is provided a method for transmitting contents, the method includes: (a) determining whether a target device, to which an encrypted content is transmitted, is a device allowed for decryption on the basis of information on devices allowed for decryption of contents; (b) decrypting the encrypted content if the target device is the device allowed for decryption; and (c) transmitting the decrypted content to the target device.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:

FIG. 1 illustrates a network configuration including an apparatus for transmitting/receiving contents with encrypting and decrypting functions according to an exemplary embodiment of the present invention;

FIG. 2 is a block diagram illustrating a detailed configuration of the apparatus for transmitting/receiving contents shown in FIG. 1;

FIG. 3 is a network configuration including an apparatus for transmitting/receiving contents with encrypting and decrypting functions according to another exemplary embodiment of the present invention;

FIG. 4 is a flowchart illustrating a method of uploading encrypted contents according to an embodiment of the present invention;

FIG. 5 is a flowchart illustrating a method of downloading ordinary contents according to an embodiment of the present invention;

FIG. 6 is a flowchart illustrating a method of moving or copying contents according to another embodiment of the present invention; and

FIG. 7 illustrates processes for encrypting or decrypting contents according to an embodiment of the present invention.

### DETAILED DESCRIPTION OF EMBODIMENTS

Exemplary embodiments of the present invention will be described in detail below with reference to the accompanying drawings. While the present invention is shown and described in connection with exemplary embodiments thereof, it will be apparent to those skilled in the art that various modifications can be made without departing from the spirit and scope of the invention.

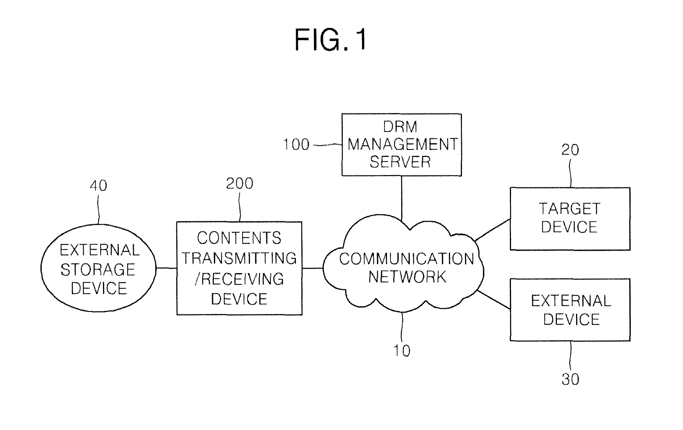

FIG. 1 illustrates a network configuration including an apparatus for transmitting/receiving contents with encrypting and decrypting functions according to an exemplary embodiment of the present invention. Although one contents transmitting/receiving device is shown in FIG. 1 for convenience, it may be realized with a device only for performing a decrypting and transmitting function on contents and a device only for performing an encrypting and receiving function on contents, separately.

Referring to FIG. 1, a target device 20, an external device 30, an external storage device 40, a DRM management server 100, and a contents transmitting/receiving device 200 are connected to each other via a wired or wireless communication network 10. An embodiment of the present invention refers to the DRM as one example of encryption but contents may be encrypted using a general encryption technique. Also, the contents may include any electronic object such as documents, videos, images, and so on.

The target device 20 and the external device 30 are servers, web servers, or external terminals at the outside of the contents transmitting/receiving device 200. As one example, they may be a Google server. The external storage device 40 is a removable storage medium such as Universal Serial Bus (USB), external Hard Disk Drive (HDD), or a device such as a database server connected to an in-house sharing network. The ordinary contents stored in the content transmitting/receiving device 200 can be transferred or copied to the external storage device 40.

The DRM management server 100 creates, edits, or updates DRM policies according to commands input by an operator and provides the latest version of the DRM policies to the target device 20. The DRM policies include a list of external devices allowed in advance for the contents transmitting/receiving device 200 to decrypt the contents to be transmitted. The target device 20 is included in the list of external devices allowed in advance. The encrypted contents mean the contents, which are encrypted by various methods such as general encryption technique, DRM technique, watermark technique, and so on. When a new device is added in the external device list of the DRM policies, the DRM management server 100 may apply the same policies to the new device without installing an additional module to a plurality of contents transmitting/receiving devices.

The contents transmitting/receiving device 200 decrypts and transmits encrypted contents. At this time, the contents transmitting/receiving device 200 transmits the decrypted contents to only the target device 20 allowed in advance. In addition, the contents transmitting/receiving device 200 selectively encrypts contents downloaded from the external device 30 and stores them to the internal storage or the external storage 40. Furthermore, the contents transmitting/receiving device 200 may encrypt contents and transmit them to the external storage device 40 when moving or coping the contents to the external storage device 40. The contents transmitting/receiving device 200 is implemented in a terminal device having a communication function such as a computer, a PDA, a notebook, and a smart phone. Unlike this, the contents transmitting/receiving device 200 may be implemented in a device connected to a terminal device (for example, a relay server and a hub) transmitting or receiving contents to or from the target device 20 or the external device 30.

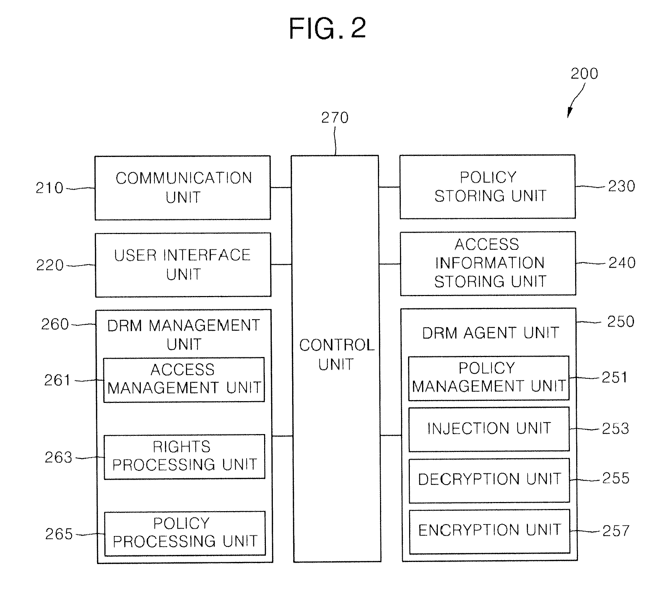

FIG. 2 is a block diagram illustrating a detailed configuration of the contents transmitting/receiving device 200 of FIG. 1 according to an embodiment of the present invention.

Referring to FIG. 2, the contents transmitting/receiving device 200 includes a communication unit 210, a user interface unit 220, a policy storing unit 230, an access information storing unit 240, a DRM agent unit 250, a DRM management unit 260, and a control unit 270.

The communication unit 210 transmits and receives contents to and from the target device 20 or the external device 30 through the communication network 10, and transmits the contents to the external storage device 40. Additionally, the communication unit 210 receives DRM policies from the DRM management server 100. The User Interface (UI) unit 220 provides an interface between a user and the contents transmitting/receiving device 200 and is implemented with various methods such as a touch panel and a button.

The policy storing unit 230 stores the DRM policies provided from the DRM management server 100. The DRM policies may be set as the following Table 1.

**[Table 1]**

| External device | IP address | Whether to be allowed for decryption |
|---|---|---|
| Google server | xxx.xxx.xxx.xxx | Not allowed for decryption |
| Daum server | yyy.yyy.yyy.yyy | Not allowed for decryption |
| Samsung server | zzz.zzz.zzz.zzz | Allowed for decryption |

Referring to Table 1, when a user uploads an encrypted content to a Google server, since the Google server is not allowed for decryption, the contents transmitting/receiving device 200 uploads the encrypted content as it is. Unlike this, when a user uploads an encrypted content to a Samsung server, since the Samsung server is allowed for decryption, the contents transmitting/receiving device 200 decrypts the encrypted content and uploads it. Moreover, the DRM policies may not include whether to allow decryption, and in this case, all external devices in the DRM policies are regarded as devices allowed for decryption.

The access information storing unit 240 stores information on the target device 20 confirmed and extracted by the access managing unit 261 described later. The stored information on the target device 20 includes an IP address of the target device 20, which is connected via the communication network 10.

The DRM agent unit 250 manages the DRM policies provided from the DRM management server 100 and performs the encryption and decryption on contents. For this, the DRM agent unit 250 includes a policy management unit 251, an injection unit 253, a decryption unit 255, and an encryption unit 257.

The policy management unit 251 stores the DRM policies, provided from the DRM management server 100 or an operator, in the policy storing unit 230. The DRM polices stored in the policy storing unit 230 include user rights to contents, rights set to contents, and information on the devices allowed for decryption. The injection unit 253 injects a code for DRM processing into an application program to allow the encryption and decryption of contents, which are processed by the application program.

The decryption unit 255 decrypts the encrypted content at the request of a user or according to a command of the control unit 270. Especially, if a content to be transmitted to the target device 20 is an encrypted content and the target device 20 is a device allowed in advance for decryption, the decryption unit 255 decrypts the encrypted content according to the command of the control unit 270. The encryption unit 257 encrypts an ordinary content at the request of a user or according to a command of the control unit 270.

The DRM management unit 260 encrypts or decrypts contents according to whether to upload or download the contents. For this, the DRM management unit 260 includes an access management unit 261, a rights processing unit 663, and a policy processing unit 265.

The access management unit 261 manages information on a device (for example, the target device 20, the external device 30, other servers (not shown), etc.) connected to the contents transmitting/receiving device 200 via the communication network 10. For example, when an application program tries to connect to the target device 20 via the communication network 10 for uploading a content, the access management unit 261 stores information on the connected target device 20 in the access information storing unit 240. Additionally, when a browser such as the internet explore is executed to connect to an external device 30 for downloading a content, the access management unit 261 obtains an IP address of the external device 30 and stores it in the access information storing unit 240. Furthermore, when the application program moves or copies a content to the external storage device 40, the access management unit 261 obtains the information on the external storage device 40 connected through the communication unit 210. The information on the external storage device 40 may include a type (for example, a USB, an HDD, and a sharing network) of the external storage device 40.

When a content to be uploaded is a DRM content, the rights processing unit 263 verifies whether a user requesting an upload of the content has a right to decrypt the content or not. If the user has the right to decrypt, the rights processing unit 263 requests the decryption of the content to the control unit 270. In addition, the rights processing unit 263 verified whether a content to be downloaded is the DRM content or not.

The policy processing unit 265 determines whether the decryption or encryption of the content is allowed with reference to the DRM policies stored in the policy storing unit 230 when an encrypted content is uploaded into the target device 20, an ordinary content is downloaded from the external device 30, and an ordinary content is copied to the external storage device 40.

First, the upload of an encrypted content will be described. The policy processing unit 265 determines whether the encrypted content is allowed for decryption. Whether the encrypted content is allowed for decryption may be set in a header of the encrypted content or may be set in an additional content list. Also, the policy processing unit 265 determines whether the connected target device 20 is allowed for decryption of the encrypted content. If the identification information (for example, IP address) of the target device 20 verified by the access management unit 261 is included in the external device list of the DRM policies stored in the policy storing unit 230, the policy processing unit 265 determines that the target device 20 is allowed for decryption.

Next, the case that an ordinary content is downloaded from the external device 30 will be described. The ordinary content is not encrypted and is opened by all users without additional authentication. The policy processing unit 265 determines whether the ordinary content downloaded from the external device 30 is to be encrypted with reference to the DRM policies stored in the policy storing unit 230. And then, the policy processing unit 265 determines whether the external device 30 is allowed for encryption. An 'encryption allowed device' is a device allowing the ordinary content to be encrypted in the contents transmitting/receiving device 200 when the ordinary content is downloaded from the external device 30.

Lastly, the case that an ordinary content is moved or copied to the external storage device 40 will be described. The policy processing unit 265 determines with reference to the DRM policies whether an encryption exception policy about the ordinary content is set. Next, the policy processing unit 265 determines whether the ordinary content is to be encrypted and determines whether the target storage device, to which the ordinary content is moved or copied, is the external storage device 40 on the basis of the information verified by the access management unit 261.

The control unit 270 determines whether to decrypt or encrypt a content based on the result determined by the rights processing unit 263 and the policy processing unit 265. At this time, when the upload of an encrypted content is requested, the control unit 270 controls the policy processing unit 265 to determine whether the encrypted content is allowed to be decrypted and the target device 20 is allowed for decryption, and controls the rights processing unit 263 to verify whether the encrypted content is a DRM content and a user has a decryption right of the encrypted content. Bas ed on the verification result, if the encrypted content is allowed to be decrypted, the target device 20 is the device allowed for decryption, the encrypted content is the DRM content, and the user has the decryption right, the control unit 270 controls the decryption unit 255 to decrypt the encrypted content and controls the communication unit 210 to transmit the decrypted content to the target device 20. Otherwise, if the encrypted content is not allowed to be decrypted, the target device 20 is not the device allowed for decryption, the encrypted content is not the DRM content, or the user does not have the decryption right, the control unit 270 performs controlling to transmit the encrypted content to the target device 20.

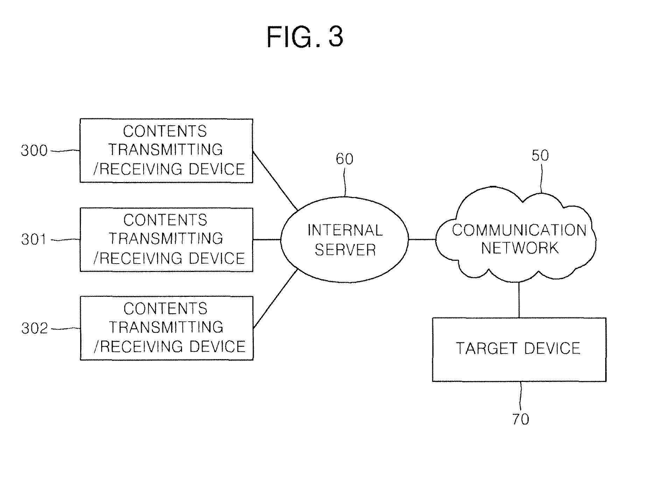

FIG. 3 is a network configuration including an apparatus for transmitting/receiving contents with encrypting and decrypting functions according to another exemplary embodiment of the present invention.

Referring to Fig. 3, an internal server 60 and a target device 70 are connected to each other via a wired or wireless communication network 50 and a plurality of contents transmitting/receiving devices 300, 301, and 302 are connected to the internal server 60. The internal server 60 may be a server or a hub located in a local network or an intranet. The target device 70 is a server or a computing device external to the contents transmitting/receiving devices 300, 301, and 302.

The internal server 60 may include hardware modules or software modules, which serve as the DRM agent 250 and the DRM management module 260 shown in FIG. 2. When an encrypted content is uploaded from one (for example, the reference number is 300) of the plurality of contents transmitting/receiving devices 300, 301, and 302 into the target device 70, the contents transmitting/receiving device 300 transmits the encrypted content to the internal server 60.

The internal server 60 confirms the IP address of the target device 70 and compares it with the DRM policies stored in the policy storing unit 230 to determine whether the encrypted content is allowed to be decrypted. I f the IP address of the target device 70 is included in the DRM policies, the internal server 60 determines that the target device 70 is a security-approved device and then decrypts the encrypted content. Moreover, the internal server 60 uploads the decrypted content to the target device 70 using a protocol for transmitting contents from the internal server 60 to the target device 70. That is, the internal server 60 may perform operations of the DRM agent unit 250 and the DRM management unit 260 described with reference to FIG. 2. In this case, it is possible to decrypt the encrypted content to be uploaded, even if the contents transmitting/receiving devices 300, 301, and 302 do not have the DRM agent unit 250 and the DRM management unit 260.

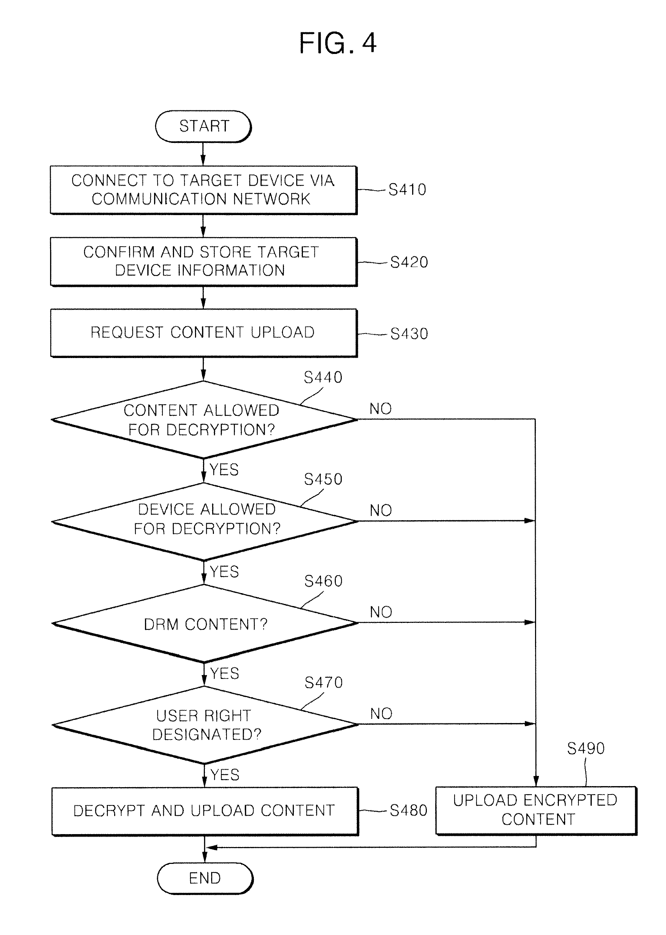

FIG. 4 is a flowchart illustrating a method of uploading encrypted contents according to an embodiment of the present invention. The method of uploading the encrypted contents shown in FIG. 4 may be performed by the contents transmitting/receiving device 200 described with reference to FIGS. 1 and 2.

Referring to FIG. 4, the contents transmitting/receiving device 200 connects to the target device 20 via a communication network in step S410. For example, a user accesses to the target device 20 by driving a web browser installed in his/her computer. Next, the contents transmitting/receiving device 200 confirms information on the connected target device 20 and stores it in the access management unit 261 in step S420. The information on the target device 20 may include an IP address of the target device 20. Then, the contents transmitting/receiving device 200 receives an upload request of the encrypted content from the user in step S430 and determines whether the encrypted content is allowed for decryption in step S440. In step 440, the contents transmitting/receiving device 200 determines whether the encrypted content is allowed for decryption on the basis of the information set in a header of the encrypted content or an additional contents list.

Next, if the encrypted content is allowed for decryption, the contents transmitting/receiving device 200 determines whether the target device 20 is allowed for decryption of the content in step S450. At this time, the contents transmitting/receiving device 200 determines that the target device 20 is a device allowed for decryption, in case that the identification information (for example, an IP address) of the target device 20 confirmed in step S420 is included in an external device list of DRM policies received in advance. Next, if the target device 20 is a device allowed in advance for decryption of the content, the contents transmitting/receiving device 200 determines whether the encrypted content is the DRM content in step S460. Next, if the encrypted content is the DRM content, the contents transmitting/receiving device 200 verifies whether the user, who request the upload of the encrypted content in step S430, has a right to decrypt the content in step S470. This may be known from a user ID used when the user connects to the target device 20. And then, if the user has the content decryption right, the contents transmitting/receiving device 200 decrypts the encrypted content and uploads it to the target device 20 in step S480. Otherwise, if it is determined that the content is not allowed for decryption, the device is not allowed for decryption, the content is not the DRM content, or the user does not have the right to decrypt, the contents transmitting/receiving device 200 uploads the encrypted content as it is to the target device 200 in operation S490.

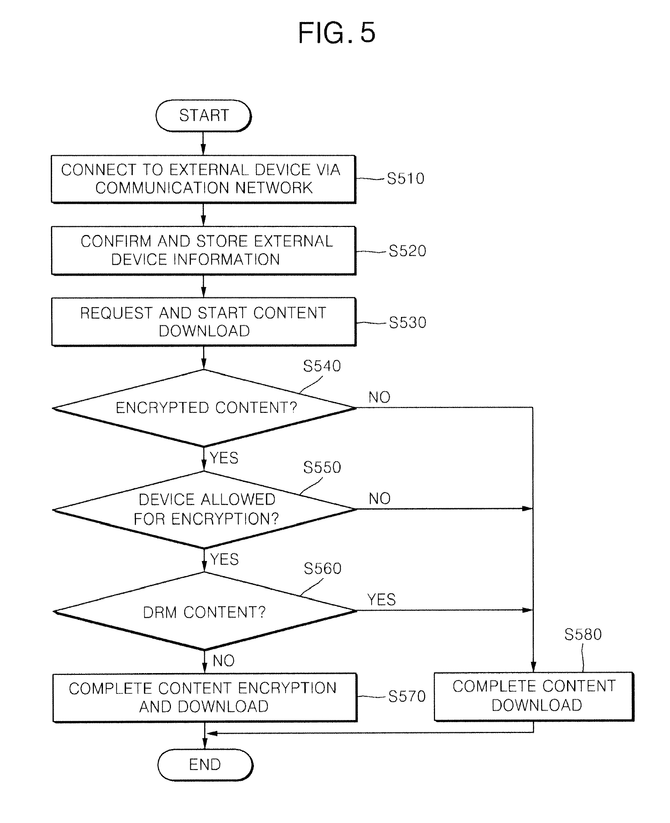

FIG. 5 is a flowchart illustrating a method of downloading ordinary contents according to an embodiment of the present invention. The method of downloading the ordinary contents shown in FIG. 5 may be performed by the contents transmitting/receiving device 200 described with reference to FIGS. 1 and 2.

Referring to FIG. 5, the contents transmitting/receiving device 200 connects to the external device 30 via a communication network in step S510. Next, the contents transmitting/receiving device 200 confirms information on the connected external device 30 and stores it in step S520. The information on the external device 30 may include its IP address. Then, when a download request of an ordinary content is inputted from a user, the contents transmitting/receiving device 200 starts to download the content from the external device 30 in step S530. Next, the contents transmitting/receiving device 200 determines the content to be encrypted when starting to download the content in step S540. And then, if it is determined that the content is to be encrypted, the contents transmitting/receiving device 200 determines whether the external device 30 is a device allowed for encryption in step S550. Next, if the external device 30 is a device allowed for encryption, the contents transmitting/receiving device 200 confirms whether the content is the DRM content in step S560. If the content is not the DRM content, the contents transmitting/receiving device 200 downloads and encrypts the content in step S570. Meanwhile, if the content is not to be encrypted, the external device 30 is not a device allowed for encryption, or the content is the DRM content, the contents transmitting/receiving device 200 downloads the ordinary content as it is and stores it in step S580.

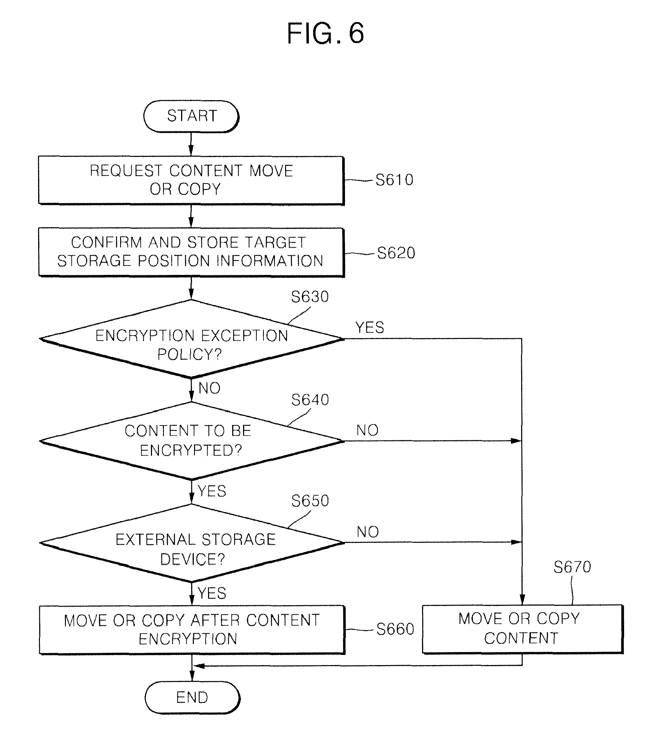

FIG. 6 is a flowchart illustrating a method of moving or copying contents according to another embodiment of the present invention. The method of moving or copying the contents shown in FIG. 6 may be performed by the contents transmitting/receiving device 200 described with reference to FIGS. 1 and 2.

Referring to FIG. 6, the contents transmitting/receiving device 200 receives a request for moving or copying the content stored in the contents transmitting/receiving device 200 from a user in step S610. Then, the contents transmitting/receiving device 200 confirms information on a position of a target storage device (that is, the position to which the ordinary content is moved or copied) that the user designates in step S610, and then, stores the confirmed information in step S620. Then, the contents transmitting/receiving device 200 determines whether encryption exception policies to the moving or copying of the content are set in step S630. At this time, the encryption exception policies are set for each content or the contents transmitting/receiving device 200. If the encryption exception policies are not set, the contents transmitting/receiving device 200 determines whether the content is an object for encryption in step S640. For example, if DRM is not applied to the content, the contents transmitting/receiving device 20 determines that the content is to be encrypted. Also, if the content is the object for encryption, the contents transmitting/receiving device 200 determines in step S650 whether the target storage device is the external storage device 40 with reference to the information confirmed in step S620. Next, if the target storage device that the user selects is the external storage device 40, the contents transmitting/receiving device 200 encrypts the content, and then, moves and copies the encrypted content to the external storage device 40 in step S660. Meanwhile, if it is determined that the encryption exception policies are set, the content is not the object for encryption, or the target storage device is not the external storage device 40, the contents transmitting/receiving device 200 moves or copies the ordinary content to the external storage device 40 without encrypting it in step S670.

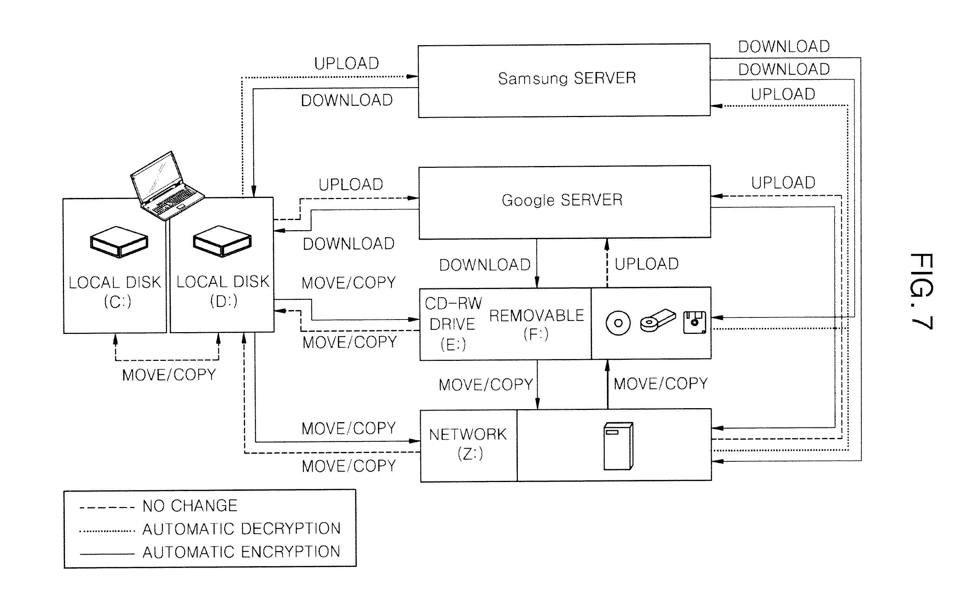

FIG. 7 illustrates processes for encrypting or decrypting contents according to an embodiment of the present invention.

Referring to FIG. 7, if a storage medium of the contents transmitting/receiving device 200 is partitioned to logical disks C and D, files are moved or copied between the logical disks C and D without decryption or encryption. This is because files are moved or copied in one contents transmitting/receiving device. Meanwhile, referring to Table 1, the Samsung server is allowed for decryption when an encrypted content is uploaded. Accordingly, the contents transmitting/receiving device 200 automatically decrypts the encrypted content and then uploads the decrypted content to the Samsung server. Additionally, when an ordinary content is downloaded from the Samsung server, the ordinary content is automatically encrypted by the contents transmitting/receiving device 200 and then is stored. Unlike this, the Google server is not allowed for decryption when an encrypted content is uploaded. That is, the Google server corresponds to a server not registered in the external device list of the DRM policies. Accordingly, the contents transmitting/receiving device 200 uploads an encrypted content to the Google server as it is. Additionally, when an ordinary content is downloaded from the Google server, the ordinary content is automatically encrypted by the contents transmitting/receiving device 200 and then is stored.

In the mean time, the external storage device 40, such as CD, DVD, USB stick, flash memory, and so on, may be connected to the contents transmitting/receiving device 200. In this case, the contents transmitting/receiving device 200 automatically decrypts the encrypted content to be moved or copied to the external storage device 40. On the other hand, a content stored in the external storage device 40 can be moved or copied to the contents transmitting/receiving device as it is. Moreover, when the contents transmitting/receiving device 200 moves or copies contents to a certain system (for example, a database server connected as a network drive) on the sharing network, the content is automatically encrypted, and then moved or copied. And, the content stored in the system on the sharing network can be moved or copied to the contents transmitting/receiving device 200 as it is.

According to the contents transmitting device and method described above, when a content is uploaded into a server allowed for content decryption, a user terminal without a program for decrypting an encrypted content may share the content by automatically decrypting and uploading the content. Especially, when the content is encrypted by a DRM technique, all users may receive decrypted contents without a module for DRM from the server allowed for content decryption. Also, the present invention may enhance security by automatically encrypting the ordinary content when the ordinary content is downloaded. Furthermore, the present invention may prevent leakage of contents by automatically encrypting contents and then moving or copying the encrypted contents to an external storage device. In addition, the present invention supports highly effective automatic encryption/decryption and download DRM without customizing.

Exemplary embodiment of the present invention can be embodied as computer-readable codes on a computer-readable recording medium. The computer-readable recording medium includes all kinds of recording devices storing data which can be read by computer systems. Examples of computer-readable recording media include a read-only memory (ROM), random-access memory (RAM), compact disc (CD)-ROM, magnetic tape, floppy disk, and optical data storage, and further include an implementation in carrier waves (e.g., transmission over the Internet). Also, the computer-readable recording medium may be distributed among computer systems connected through a network and stored and executed as a code that can be read in a de-centralized method.

It will be apparent to those skilled in the art that various modifications can be made to the above-described exemplary embodiments of the present invention without departing from the spirit or scope of the invention. Thus, it is intended that the present invention covers all such modifications provided they come within the scope of the appended claims and their equivalents.

## Claims

1. A contents transmitting apparatus, the apparatus comprising:
a policy storing unit storing information on devices allowed for decryption of contents;
a policy processing unit determining whether a target device, to which an encrypted content is transmitted, is a device allowed for decryption based on the information stored in the policy storing unit;
a decryption unit decrypting the encrypted content; and
a control unit controlling the decryption unit to decrypt the encrypted content if the target device is the device allowed for decryption.

2. The apparatus of claim 1, wherein the control unit controls the decryption unit to decrypt the encrypted content in case that the encrypted content is allowed to be decrypted.

3. The apparatus of claim 1, further comprising a rights processing unit determining whether a decryption right of the encrypted content is designated to a user requesting a transmission of the encrypted content,
wherein the control unit controls the decryption unit to decrypt the encrypted content if the decryption right is designated to the user.

4. The apparatus of claim 1, wherein the policy processing unit determines that the target device is a device allowed for decryption when identification information of the target device is included in the information on devices.

5. The apparatus of claim 1, further comprising an encryption unit encrypting contents,
wherein the control unit controls the encryption unit to encrypt an ordinary content to be moved or copied to an external storage device.

6. A contents transmitting method, the method comprising:
(a) determining whether a target device, to which an encrypted content is transmitted, is a device allowed for decryption on the basis of information on devices allowed for decryption of contents;
(b) decrypting the encrypted content if the target device is the device allowed for decryption; and
(c) transmitting the decrypted content to the target device.

7. The method of claim 6, wherein, in step (b), the encrypted content is decrypted when the encrypted content is allowed to be decrypted.

8. The method of claim 6, wherein, in step (b), the encrypted content is decrypted when a decryption right of the encrypted content is designated to a user requesting a transmission of the encrypted content.

9. The method of claim 6, wherein, in step (b), the target device is determined as the device allows for decryption when identification information of the target device is included in the information on devices.

10. A y computer-readable recording medium storing a program for executing the contents transmitting method according to any one of claims 6 to 9 in a computer.
